Europäisches Patentamt

European Patent Office

Office européen des brevets

(11) Veröffentlichungsnummer: **0 237 595**
**A1**

## (12) EUROPÄISCHE PATENTANMELDUNG

(21) Anmeldenummer: 86103644.0

(22) Anmeldetag: 18.03.86

(51) Int. Cl.⁴: **F16B 41/00**

(43) Veröffentlichungstag der Anmeldung:
23.09.87 Patentblatt 87/39

(84) Benannte Vertragsstaaten:
AT BE CH DE FR GB IT LI LU NL SE

(71) Anmelder: **Schneider, Eduard**
**Max Eyth-Strasse 10**
**D-7460 Balingen(DE)**

(72) Erfinder: **Schneider, Eduard**
**Max Eyth-Strasse 10**
**D-7460 Balingen(DE)**

(74) Vertreter: **Bieri, Richard, Dr. rer. nat.,**
**Dipl.-Phys.**
**Hauptstrasse 32/I**
**D-7218 Trossingen 1(DE)**

(54) **Sicherheitsschraube für unlösbare Verbindungen.**

㊿ Bei einer Sicherheitsschraube (26) mit einem Kopf (23) von beliebiger Gestaltung der Ausnehmung bzw. Außenform für ein-bzw. aufsteckbare Werkzeuge zwecks dauerhafter Befestigung von Teilen durch Verschraubung für unlösbare Verbindungen besteht die Verbesserung darin, daß der -(Halbrund)-Kopf mindestens ein Formteil für das Einstecken eines Schraubendrehers bzw. -Schlüssels enthält, das durch ein formschlüssig mit Preßsitz kraftschlüssig vernietbares und in eine Ausnehmung des Kopfes einsteckbares Steckteil (25) mit einer außen glattrunden Oberfläche ausstattbar ist. In besonderer Ausbildung weist as Formteil und in einer Variante der Schaft eine Ausnehmung für den Schraubendreher bzw. die Außenform des Schlüssels auf, in welche entweder ein Steckteil oder der Stutzen eines anderen Kopfes mit außen glattrunder Oberfläche formschlüssig unter Preßsitz einsteckbar vernietbar ist, so daß der Kopf eine außen glattrunde Oberfläche ohne Kanten aufweist und/oder an keiner Stelle der Oberfläche gegenüberliegend ebene Angriffsflächen enthält.

FIG.2

## Sicherheitsschraube für unlösbare Verbindungen

Die vorliegende Erfindung betrifft eine Sicherheitsschraube mit einem Kopf von beliebiger Gestaltung für unlösbare Verbindungen gemäß dem Oberbegriff von Anspruch 1.

In vielen täglichen Bereichen des menschlichen Lebens gibt es Fälle, in denen man Verschraubungen benötigt, die gegen unbefugtes Lösen gesichert sein müssen. Hier ist einmal an Fenster mit Gitter, insbesondere in Kellergeschossen, und Türen mit abgedeckten Öffnungen zu denken, die gegen Einbruch gesichert sein müssen, ferner an Einrichtungen und Geräte, beispielsweise optische und mechanische Erzeugnisse, deren Justierung und Einstellung sowie deren Montage, zB. in einem Gehäuse, nicht verändert werden darf. Solche Fälle liegen auch bei Produkten der Automobil-Industrie (Zündung, Lenkung, Bremsanlagen) vor, aber auch bei Fertigungseinrichtungen, wie Automaten odgl., sowie bei Verkehrssteuerungs-Einrichtungen, wie Hinweis-und Verbotsschilder, Ampel-Steuerungen, die aus Garantie-oder Sicherheitsgründen Unberechtigten überhaupt nicht zugänglich gemacht werden dürfen.

Üblicherweise macht man von der Verschweißung von Gehäusen von Vorrichtungteilen Gebrauch; diese ist aber häufig -sei es wegen der Formgebung, der unzureichenden Zugänglichkeit odgl. oder wegen der Werkstoffeigenschaften -nicht anwendbar. In manchen Fällen sind schon Schrauben mit einer Art Doppelkopf eingesetzt worden - (DE-PS 26 25 142), die unter der Bezeichnung "Abreißschraube für die Sicherung der Zündverteiler-Einstellung" Verwendung gefunden haben. Bei diesen ist auf dem üblichen Kopf der Schraube -allerdings ohne Schlitz, Sechskant odgl. -einstückig durch einen Zwischenfuß ein weiterer Kopf mit Schraubenschlitz odgl. angebracht, der nach der endgültigen Einstellung der Schraube abgerissen wird, so daß eine Verdrehung der Schraube ausgeschlossen ist.

Weiterhin gibt es eine große Zahl von Formen für die Ausnehmung des Kopfes für Schraubendreher, wie Schlitz (Kreuzschlitz -DE-OS 31 17 658) verschiedener Art und Form, Innensechskant oder -Mehrkant, mit Kanten oder abgerundeten Ecken - (DE-AS 17 28 574), Bogendreieck (DE-OS 26 o8 892). Bei allen diesen Schrauben wird das Lösen dadurch erschwert, daß ein Spezialwerkzeug angepaßter Formung benötigt wird.

Es ist auch schon von der Art einer Vernietung mittels Verformung des Kopfes bzw. von Teilen desselben (DE-OS 23 37 o37) Gebrauch gemacht worden, wobei Kopf-und Werkstückmaterial durch axial auf den Kopf des Bolzens angewendete Kräfte zum Ineinanderfließen gebracht werden (DE-OS 23 37 o37). Schließlich hat man auch die Unterseite des Kopfes einer Senkschraube mit Senkschneiden ausgestattet, die durch ihre einseitige Neigung ein Zurückdrehen der Schraube verhindert (DE-OS 33 44 o48).

In manchen der genannten Fälle ist es möglich, von dem Prinzip der Plombierung der Schrauben Gebrauch zu machen; dies kommt jedoch nur bei amtlichen Geräten oder bei solchen in Frage, bei denen der Benutzer seine eigene Sicherheit oder eine Gewährleistungsansprüche gefährdet. Unter Bedingungen, in denen man kriminelle Delikte, wie einen Einbruchdiebstahl verhindern will, versagen diese Mittel selbstverständlich. Oft kommt es auch darauf an, daß man eine Lösung der Verschraubung und nachträgliche Wiederherstellung derselben an Spuren der gebrauchten Werkzeuge erkennen muß, um den verursachten Schaden und seinen Täter verfolgen zu können.

Außer in dem Falle der Abreiß-Schraube können die vorbeschriebenen Aufgaben von der beschriebenen Ausbildungen des Standes der Technik nicht erfüllt werden. Die Abreiß-Schraube -scheidet für den Bereich architektonischer oder künstlerischer Anwendungen aus, weil dort die Verschraubung einen unbeschädigten Eindruck machen muß. Der vorliegenden Erfindung liegt deshalb die Aufgabe zugrunde, eine Schraube für unlösbare Verbindungen herzustellen, deren Kopf auch nach durchgeführter Verschraubung völlig unbeschädigt ist und von keinem Werkzeug, selbst mit Hilfe von Spezialwerkzeugen, mehr gelöst werden kann.

Diese Aufgabe wird durch die Schraube gemäß den Teilmerkmalen des Oberbegriffs von Anspruch 1 in Verbindung mit den Teilmerkmalen des kennzeichnenden Teils von Anspruch 1 gelöst. Diese Lehre vermittelt mehrere Möglichkeiten, eine Verschraubung gegen Lösung von Unbefugten zu sichern oder auch dagegen, daß sie versehentlich herbeigeführt wird, wenn erst die beschriebenen Sicherungsmaßnahmen durchgeführt sind. Weiterbildungen der Erfindung sind Gegensstände der Unteransprüche. Ausführungsbeispiele sind im folgenden anhand der Zeichnung erläutert; er stellen dar:

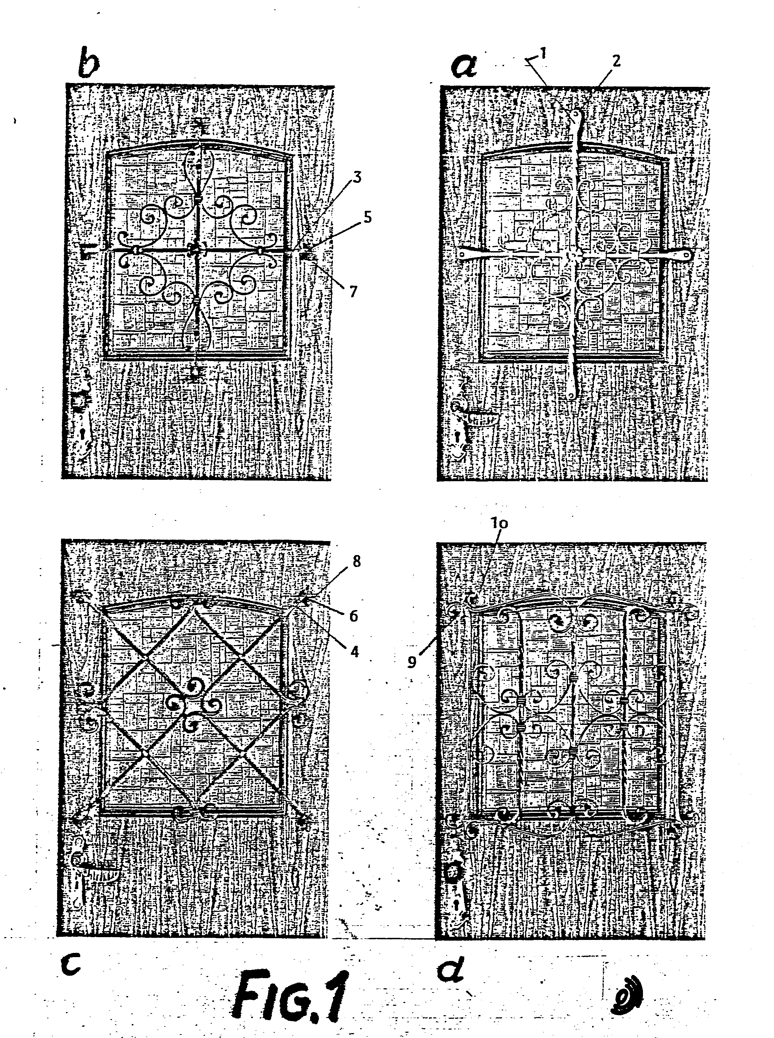

Fig.1: Anwendungsfälle bei Fenstergittern in Türen, die gegen Einbruch gesichert sein müssen;

Fig.2:

a) Metallschraube mit Halbrundkopf und Innensechskant-Ausnehmung;

b) Halbrund-Holzschraube mit Innenvierkant-Ausnehmung;

c) Metallschraube mit Spreizbolzen;
Fig.3:

a) Gewindebolzen mit Innenvierkant für einen Halbrundkopf mit Vierkantstutzen
1. (links) in einfacher Ausbildung
2. (rechts) in Weiterbildung mit Kopf im Schnitt mit Hilfsbund am Schaft und Ringnut an der Kopfunterseite;

b) Linsensenkschraube mit Sonder-Schraubenschlitz;

c) Vollgewindeschraube mit Kreuzschlitz-Ausnehmung.

In Fig. 1 sind vier Anwendungsfälle von vergitterten Fenstern in Türen abgebildet, wie sie häufig im allgemeinen Gebrauch vorkommen. Bei dem Beispiel Fig.1a sind übliche, am Ende abgeflachte Stäbe 1 mit einer Bohrung verwendet, in welcher die Sicherheitsschraube 2 -in diesem Falle mit Holzgewinde -eingesetzt ist. In Fig.1b und 1c haben die Trägerstäbe des Gitters an ihrem Ende 3,4 einen angewinkelten Fortsatz 5,6, der durch eine Vierkant-Deckplatte 7,8 gehalten wird, indem der Fortsatz 5,6 mit der Vierkantdeckplatte 7,8 an der Unterseite vernietet ist. Die Vierkant-Deckplatte 7,8 ist mit der Türe in den Ecken durch Sicherheitsschrauben verbunden. Diese Sicherheitsschrauben können in an sich bekannter Weise durch eine Stauchhülse am inneren Ende des Schraubenschaftes, dann aber mit einem Metallgewinde, zusätzlich gesichert sein. In ähnlicher Weise, wenn auch einstückig, sind die Schneckenenden 9,1o eines Stabpaares des Gitters so abgeflacht, daß sie eine Sicherheitsschraube aufnehmen können.

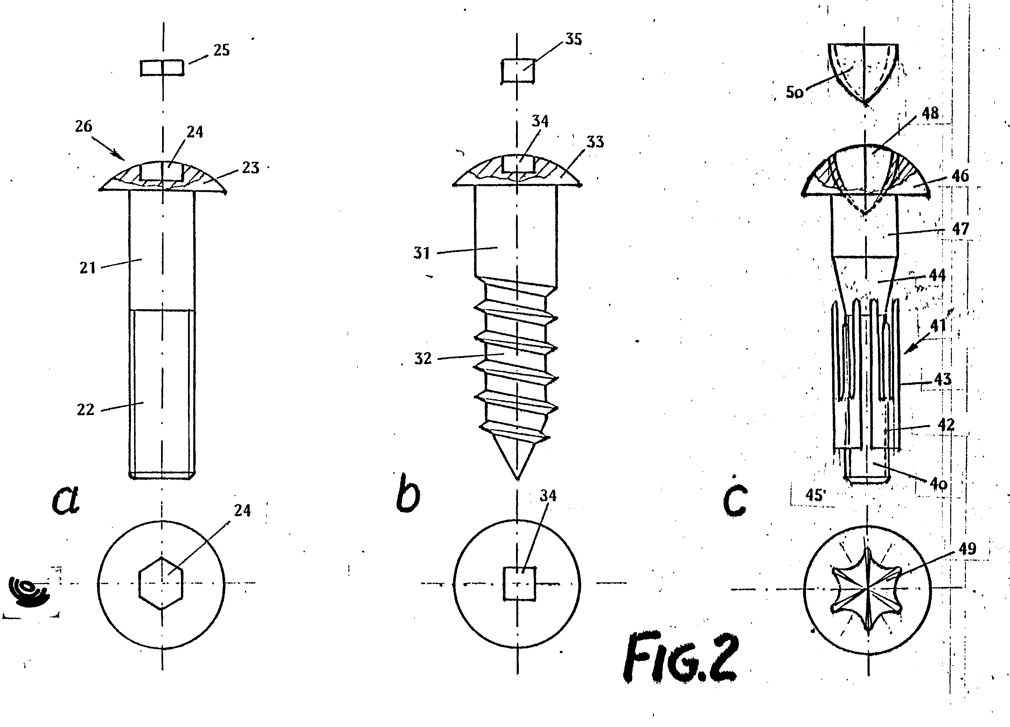

In Fig.2, a) (links) besteht die Sicherheitsschraube aus einem gewindelosen Schaft 21, dem Gewindestutzen 22 am freien Ende und dem Halbrundkopf 23, der mit einer Sechskant-Innenausnehmung 24 ausgestattet ist. Für die Innensechskant-Ausnehmung 24 ist das Steckteil 25 für Preßsitz passend einsteckbar so ausgebildet, daß es an keiner Stelle aus der Oberfläche des als Halbrundkopf 23 ausgebildeten Formteils 26 herausragt.

In Fig.2, b) (mitte) ist eine Holzschraube mit gewindelosem Schaftteil 31 und Holzgewindeteil 32, sowie Halbrundkopf-förmigem Formteil 33, ähnlich wie in Fig.2a dargestellt, wobei jedoch die Innenausnehmung 34 in diesem Falle als Vierkant - (quadratisch) und das Steckteil 35 in gleicher Form für Preßsitz-einsteckbare Vernietung ausgebildet sind.

In Fig. 2 c) (rechts) ist die Sicherheitsschraube mit Metallgewinde 4o und Spreizbolzen 41 ausgestattet, wobei der Spreizbolzen mit seinem verschieblichen Hülsenteil 42, das federnd ausgebildet ist, indem es nachgiebige Federn 43 an dem auf den Konus 44 zulaufenden Abschnitt des Hülsenteils 42 und den Schlitz 45 enthält, beim Anziehen der Schraube auf den Konus 44 zu getrieben wird. Zwischen den Konus 44 und dem Halbrundkopf 46 ist ein gewindeloser Teil des Schaftes 47 angeordnet; der Kopf enthält die Ausnehmung 48, die von sechskantiger Form 49 mit gekrümmten Flächen zwischen den Kanten einerseits und in der Höhe spitz zulaufenden gekrümmtem Mantel 5o andererseits ausgebildet ist.

Dieses Steckteil ist so bemessen, daß es, unterstützt durch seine mehrfach gekrümmte Form mit Kanten, die Haftung durch den Preßsitz unterstützt. Die Sicherheitsschraube wirkt also in zweifacher Richtung gegen unbefugtes Lösen, zum einen dadurch, daß die Ausnehmung 48 nach der endgültigen Befestigung und eingepreßtem Steckteil der Lösung durch den Schraubendreher nicht mehr zugänglich ist und zum anderen, daß die Haftung der Schraube in der Bohrung wegen der Spreizhülse ein Herausziehen unmöglich macht, zumal der Halbrundkopf wegen seiner außen glattrunden Oberfläche keinen Halt für ein Werkzeug bietet.

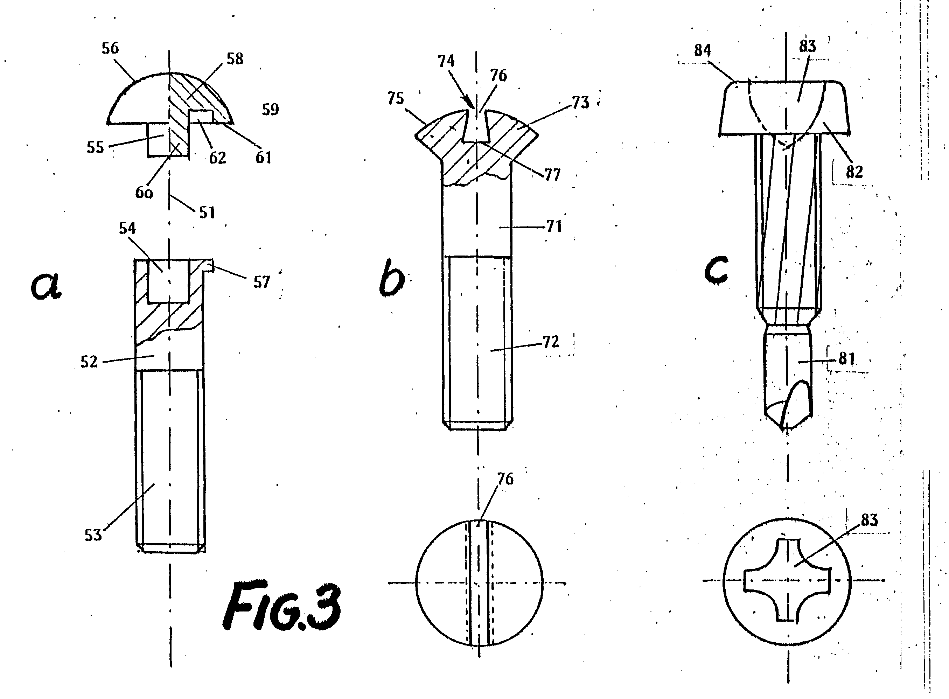

In Fig.3 ist im linken Teil a) -und zwar in der einen Hälfte links von der strichpunktiert gezeichneten Achse 51 der Schaft mit gewindelosem Teil 52 und Gewindeende 53 mit der Vierkant-förmigen Ausnehmung 54 ausgestattet, in welche der Vierkant-förmige Stutzen 55 des Austausch-Kopfes 58 mit außen glattrunder Oberfläche 56 unter Preßsitz eingesteckt wird. In der anderen Hälfte rechts von der strickpunktiert gezeichneten Achse 51 ist der obere, gewindefreie Teil des Schaftes 52 mit einem ringförmigen Bund 57 ausgestattet, dessen Durchmesser größer ist als der des Schaftes und der so als ein Hilfskopf und somit als Anschlag für die Verschraubung dient, solange der eigentliche Halbrundkopt 58 mit außen glattrunder Oberfläche 59 mit seinem Vierkantstutzen 6o noch nicht unter Preßsitz in die Ausnehmung 54 eingesteckt ist. An seiner Unterseite 61 ist der Halbrundkopf 58 ebenfalls mit außen glattrunder Oberfläche mit der Ringnut 62 ausgestattet, in welche der ringförmige Bund 57 an der Außenseite und in der Höhe mit Spiel bzw. Luft eintaucht.

In Fig.3 b) ist die Linsensenkschraube wiederum mit etwa zur Hälfte, oben, vollem Schaft 71 und zur anderen Hälfte mit Gewinde-versehenem Schaft 72 mit einem Linsensenkkopf 73 ausgestattet, der als Ausnehmung 74 an seiner sonst glattrunden Oberfläche 75 den Schraubendreher-Schlitz 76 aufweist, dessen Querschnitt sich zum inneren Ende 77 hin erweitert. In diese Ausnehmung ist eine nicht gezeichnete Leiste von rechteckigem Querschnitt von der Breite des Schlitzes 76 einpressbar vorgesehen, so daß er wegen dieser Querschnittsformung verhältnismäßig leicht in den Schlitz eingeführt werden kann, aber durch die kleinere Breite am Eingang des Schlitzes 76 dort unter besonderem Preßsitz gehalten wird.

In Fig.3 c) ist die Sicherheitsschraube mit selbstschneidendem Gewinde am Schaft, dh. am freien Ende mit dem Schneidteil 81 versehen ausgebildet; der Zylinderkopf 82 ist mit einer Kreuzschlitz-Ausnehmung ausgestattet, die für das Einstecken unter Preßsitz eines Steckteils von zu der Ausnehmung 83 passender Form vorgesehen ist, wobei dieses Steckteil die Oberfläche 84 des Zylinderkopfes 82 an keiner Stelle überragt, dh. eine Oberfläche besitzt, die höchstens in der Fläche der Oberfläche 84 des Zylinderkopfes 82 liegt.

Die Sicherheitsschraube mit der erfindungsgemäßen Ausbildung der beschriebenen Ausführungsbeispiele, deren Besonderheiten, wie zB. die Form des Kopfes und des Steckteils, die Gewindeart usw., die gegeneinander austauschbar und auch kombinierbar sind, erfüllen die oben gestellte Aufgabe in teilweise gesteigertem Grade. Die Ausführungsbeispiele sind hinsichtlich weiterer möglicher Varianten nicht ausschließlich, vielmehr sind für den Durchschnittsfachmann ohne weiteres Varianten nahegelegt, deren Besonderheiten im vorstehenden nicht wiedergegeben sind, aber das Grundprinzip der nachträglichen Auffüllung der für den Antrieb notwendigen Ausnehmung ausnützen.

## Ansprüche

1. Sicherheitsschraube mit einem Kopf von beliebiger Gestaltung der Ausnehmung bzw. Außenform für ein-bzw. aufsteckbare Werkzeuge zum Drehantrieb zwecks dauerhafter Befestigung von Teilen durch Verschraubung mit einem anderen ortsfesten oder beweglichen Widerlager, für unlösbare Verbindungen,
dadurch gekennzeichnet,
daß der (Halbrund)-Kopf (23) mindestens ein Formteil für das Einstrecken eines Schraubendrehers bzw. -Schlüssels enthält, das durch ein formschlüssig mit Preßsitz kraftschlüssig vernietbares und in eine Ausnehmung (24) des Kopfes einsteckbares Steckteil (25) mit einer außen glatt runden Oberfläche ausstattbar ist.

2. Sicherheitsschraube nach Anspruch 1,
dadurch gekennzeichnet,
daß das Formteil (zB. 26) des Kopfes eine Ausnehmung (zB. 24, 34, 54) für den Schraubendreher aufweist, die durch ein formschlüssig unter Preßsitz einsteckbar vernietbares Steckteil (zB. 25, 35) so ausfüllbar ist, daß der Kopf eine außen glatt runde Oberfläche (59) ohne Kanten aufweist und/oder an keiner Stelle der Oberfläche gegenüberliegend ebene Angriffsflächen enthält.

3. Sicherheitsschraube nach Anspruch 1 und 2,
dadurch gekennzeichnet,
daß die Höhe des Steckteils (zB. 25, 35) für die Ausnehmung im Formteil über seine ganze Oberfläche am oberen Ende (zB. 56) kleiner ist als der Abstand der Fläche am oberen Ende von der Grundfläche der Ausnehmung.

4. Sicherheitsschraube nach den Ansprüchen 1 bis 3,
dadurch gekennzeichnet,
daß die Ausnehmung, insbesondere ein Schlitz - (76), im Formteil im axialen Schnitt in einer Sonderform ausgebildet ist, vorzugsweise von am inneren Ende (77) grö größerer Abmessung als am äußeren Ende.

5. Sicherheitsschraube nach Anspruch 1,
dadurch gekennzeichnet,
daß der Kopf der Schraube mit einer Formung (54) für das Einstecken bzw. Aufstecken eines Schraubendrehers bzw.-Schlüssels vom ihrem Schaft (52) abnehmbar und durch einen anderen Kopf mit außen glatt runder Oberfläche (59) ersetzbar ist, der einen in die Ausnehmung (54) des Schaftes an seinem oberen Ende unter Preßsitz einsteckbaren Stutzen (55) von zu der Ausnehmung passender Querschnittsformung aufweist und mit dessen Hilfe mit dem Schaft vernietbar ist.

**FIG.1**

"Sicherheitsschraube"
Anm.: Eduard Schneider, 7460 Balingen
2oo oo1-1 - 12.o3.86. - Dr.Bi/bp

0 237 595

**FIG.2**

Anm.: Eduard Schneider, 7460 Balingen
200 001-1 - 12.03.86. - Dr.Bi/bp

Patentanwalt
Dr. Richard Bierl
Hauptstraße 32
7218 Trossingen

0 237 595

**a**

**b**

**c**

FIG.3

**Europäisches Patentamt**

# EUROPÄISCHER RECHERCHENBERICHT

Nummer der Anmeldung

EP  86 10 3644

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C-  60 130  (BAUMANN) <br> * Figuren 1-5 * <br><br> --- | 1,2 | F 16 B  41/00 |
| X | DE-C-  118 070  (SCHOTT) <br> * Figur 1 * <br><br> --- | 1,2 | |
| X | DE-C-  228 199  (WINNIKES) <br> * Figur 1 * <br><br> --- | 1,2 | |
| A | DE-C-  454 087  (THE NATIONAL CASH REGISTER CO.) <br> * Figur 1 * <br><br> --- | 1,2 | |
| A | CH-A-  409 532  (WOHLGROTH) <br> * Figur 1 * <br><br> --- | 1,2 | |
| X | FR-A-2 434 952  (NEIMAN) <br> * Figuren 1-4 * <br><br> --- | 1,2 | RECHERCHIERTE SACHGEBIETE (Int. Cl.4) <br><br> F 16 B  41/00 |
| X | FR-A-2 554 186  (INTRAVISS) <br> * Figur 7 * <br><br> ----- | 1,2 | |

Der vorliegende Recherchenbericht wurde für alle Patentansprüche erstellt.

| Recherchenort | Abschlußdatum der Recherche | Prüfer |
|---|---|---|
| BERLIN | 09-09-1986 | ZAPP E |